# EUROPÄISCHE PATENTSCHRIFT

(11) **EP 3 308 682 B1**
(45) Veröffentlichungstag und Bekanntmachung des Hinweises auf die Patenterteilung: **15.05.2019**
(21) Anmeldenummer: 17193631.3
(22) Anmeldetag: 28.09.2017
(51) Int. Cl.: A47J 31/06, B65B 29/02, B65D 85/804

(54) **MEHRFACH VERWENDBARE KAPSEL ZUR ZUBEREITUNG VON GETRÄNKEN UND BEFÜLLVORRICHTUNG ZUM BEFÜLLEN EINER DERARTIGEN MEHRFACH VERWENDBAREN KAPSEL SOWIE VERFAHREN ZUR ZUBEREITUNG VON GETRÄNKEN MIT EINER DERARTIGEN MEHRFACH VERWENDBAREN KAPSEL MITTELS EINER KAPSEL-GETRÄNKEMASCHINE**
REUSABLE CAPSULE FOR PREPARING BEVERAGES AND FILLING DEVICE FOR FILLING SUCH A REUSABLE CAPSULE AND METHOD FOR THE PREPARATION OF BEVERAGES WITH SUCH A REUSABLE CAPSULE USING A CAPSULE BEVERAGE MACHINE
CAPSULE RÉUTILISABLE DESTINÉE À LA PRÉPARATION DE BOISSONS ET PROCÉDÉ DE REMPLISSAGE D'UNE TELLE CAPSULE RÉUTILISABLE AINSI QUE PROCÉDÉ DE PRÉPARATION DE BOISSONS À BASE D'UNE TELLE CAPSULE RÉUTILISABLE AU MOYEN D'UNE MACHINE À BOISSONS À BASE DE CAPSULE

(30) Priorität: 12.10.2016 DE 102016219866
(43) Veröffentlichungstag der Anmeldung: 18.04.2018
(73) Patentinhaber: Müller Mechanik GmbH & Co. KG, 96215 Lichtenfels (DE)
(72) Erfinder: Müller, Jürgen, 96215 Lichtenfels (DE)
(74) Vertreter: Rau, Schneck & Hübner Patentanwälte Rechtsanwälte PartGmbB

(56) Entgegenhaltungen:
- EP-A1- 2 682 028
- WO-A1-2015/059022

## Beschreibung

Die Erfindung betrifft eine mehrfach verwendbare Kapsel zur Zubereitung von Getränken mittels einer Kapsel-Getränkemaschine. Die Erfindung betrifft ferner ein Verfahren zur Zubereitung von Getränken mit einer mehrfach verwendbaren Kapsel mittels einer Kapsel-Getränkemaschine.

Kapsel-Getränkemaschinen sowie dazu geeignete Kapseln zur Zubereitung von Getränken sind bekannt. Die Hersteller von Kapsel-Getränkemaschinen verwenden im Bodenbereich der Brühkammer der Kapsel-Getränkemaschinen und an den dazugehörigen Kapseln herstellerspezifische Vorsprünge und Freisparungen, wodurch die Kapsel-Getränkemaschinen lediglich mit entsprechend geformten Kapseln betrieben werden können. In erster Linie handelt es sich bei derartigen Kapseln um Einwegkapseln aus Aluminium oder Kunststoff.

Aus der DE 10 2011 012 860 A1 ist eine mehrfach verwendbare Kapsel zur Zubereitung eines Getränks bekannt, welche einen Behälter und einen Deckel umfasst. Im Bereich des Bodens umfasst der Behälter eine ringförmige Einformung und eine mittige Ausformung, damit der Behälter nicht von der Einspritzvorrichtung der Kapsel-Getränkemaschine durchstoßen wird. Darüber hinaus umfasst der Deckel ein zusätzliches Dichtelement aus Weichmaterial. Behälter und Deckel sind durch formschlüssige Verrastung miteinander lösbar verbunden.

Die WO 2015/059022 A1 sowie die WO 2015/000775 A1 offenbaren nur einmalig verwendbare Papierkapseln umfassend einen Flansch, an welchem ein Kapselgrundkörper sowie der Verschlussdeckel angebracht sind.

Aus der US 2011/0186450 A1 ist eine Kapsel mit einem Dichtelement bekannt, wobei das Dichtelement an der Innenseite der Kapsel ein Stützskelett ausbildet.

Die US 2014/083873 A1 offenbart eine nur einmal verwendbare Papierkapsel mit einem Verstärkungsring.

Die EP 2 682 028 A1 offenbart einen Einsatz für eine Portionskaffeemaschine, wobei wenigstens ein Bestandteil des Einsatzes wiederverwendbar ist.

Es ist eine Aufgabe der vorliegenden Erfindung, den bekannten Stand der Technik derart zu verbessern, dass eine mehrfach verwendbare Kapsel kostengünstig herstellbar und gleichzeitig funktionssicher handhabbar ist. Eine weitere Aufgabe der Erfindung ist es, die Benutzung, insbesondere die Reinigung und das Befüllen einer mehrfach verwendbaren Kapsel zu vereinfachen.

Diese Aufgabe wird gelöst durch eine mehrfach verwendbare Kapsel mit den Merkmalen des Anspruchs 1. Im Gegensatz zu der aus der DE 10 2011 012 860 A1 bekannten Kapsel ist der Kapselgrundkörper der erfindungsgemäßen Kapsel aus einem Weichmaterial ausgebildet. Das Weichmaterial ist formfest und elastisch verformbar. Dadurch, dass das Versteifungselement an dem umlaufenden flanschartigen Rand des aus Weichmaterial hergestellten Kapselgrundkörpers derart angebracht ist, dass der Rand eine dem Boden zugewandte umlaufende Dichtfläche ausbildet, ist bei der erfindungsgemäßen Kapsel das Anbringen eines zusätzlichen Dichtelements nicht notwendig, da die umlaufende Dichtfläche zum Abdichten der Brühkammer der Kapsel-Getränkemaschine dient. Hierdurch wird eine vereinfachte Benutzung sowie eine Reduzierung der Produktionskosten ermöglicht.

Neben der Dichtfunktion zur Brühkammer der Kapsel-Getränkemaschine ermöglicht die erfindungsgemäße Kapsel eine vereinfachte Ausgestaltung des Bodens. Aufgrund des aus Weichmaterial bestehenden Kapselgrundkörpers ist der Boden derart flexibel, dass eine herstellerspezifische Formung des Bodens nicht erforderlich ist. Hierdurch wird zum einen eine Reduzierung der Produktionskosten erreicht und zum anderen eine mehrfach verwendbare Kapsel bereitgestellt, welche universell für alle herstellerspezifischen Kapsel-Getränkemaschinen einsetzbar ist und ein größeres Füllvolumen aufweist.

Des Weiteren ist eine aufwendige Anpassung des Bodens der erfindungsgemäßen mehrfach verwendbaren Kapsel bei Änderungen der herstellerspezifischen Vorsprünge und/oder Freisparungen der Brühkammer oder der Einspritzvorrichtung nicht mehr notwendig. Die erfindungsgemäße Kapsel ist derart flexibel ausgebildet, dass sie sich an die neue Ausgestaltung der Kapsel-Getränkemaschine anpasst. Somit zieht eine herstellerspezifische Änderung der Kapsel-Getränkemaschine keine Änderung der mehrfach verwendbaren Kapsel nach sich.

Ein weiterer Vorteil der erfindungsgemäßen Kapsel besteht darin, dass keine formschlüssige oder kraftschlüssige Verbindung zwischen dem Deckel und dem Kapselbehälter notwendig ist. Bei der bekannten mehrfach verwendbaren Kapsel muss eine derartige Verbindung ausgebildet sein, um die gesamte Kapsel nach dem Extraktions- bzw. dem Brühprozess aus der Kapsel-Getränkemaschine auszuwerfen, da das Auswurfelement der Kapsel-Getränkemaschine am überstehenden Rand des Deckels angreift. Eine derartige Ausgestaltung hat insbesondere den Nachteil, dass die Kapsel beim Verschließen verklemmt bzw. verkantet oder sich der Deckel beim Auswerfen löst. Demgegenüber dient bei der erfindungsgemäßen Kapsel das Versteifungselement zum Ausbilden der Angriffsfläche, an der nach Abschluss des Extraktions- bzw. des Brühprozesses das Auswurfelement der Kapsel-Getränkemaschine angreift, um die erfindungsgemäße Kapsel aus der Kapsel-Getränkemaschine auszuwerfen. Hierzu besteht das Versteifungselement aus dem im Vergleich zu dem Weichmaterial härteren Hartmaterial bzw. Versteifungsmaterial. Die erfindungsgemäße mehrfach verwendbare Kapsel, ohne die benötigte form- oder kraftschlüssige Verbindung zwischen Deckel und Kapselbehälter, ist in der Produktion kostengünstig herstellbar und in der Bedienung einfach und zuverlässig handhabbar.

Dadurch, dass das Versteifungselement aus dem im Vergleich zu dem Weichmaterial härteren Material beziehungsweise Versteifungsmaterial besteht, wird dem aus Weichmaterial bestehenden Grundkörper zusätzliche Stabilität verliehen. Folglich ist ein Befüllen der Kapsel mit Getränkerohmaterial sowie ein Einsetzen der Kapsel in die Brühkammer der Kapsel-Getränkemaschine erleichtert.

Die Angriffsfläche wird vom Versteifungselement entweder unmittelbar beziehungsweise direkt oder aber mittelbar beziehungsweise indirekt ausgebildet.

Wird die Angriffsfläche unmittelbar von dem Versteifungselement ausgebildet, greift das Auswurfelement direkt an diesem an. Das Versteifungselement bildet folglich eine dem Boden zugewandte Angriffsfläche aus. Das Versteifungselement ist dabei derart an dem Rand des Kapselgrundkörpers befestigt, dass der Rand weiterhin die Dichtfläche zum Abdichten der Brühkammer ausbildet.

Bei der mittelbaren beziehungsweise indirekten Ausbildung der Angriffsfläche verstärkt das Versteifungselement den aus Weichmaterial bestehenden flanschartigen Rand. Hierbei wird die Angriffsfläche, an welcher das Auswurfelement der Kapsel-Getränkemaschine angreift, um die Kapsel aus der Brühkammer auszuwerfen, durch den zumindest bereichsweise verstärkten flanschartigen Rand ausgebildet. Der flanschartige Rand bildet zugleich die Dichtfläche zum Abdichten der Brühkammer aus. Vorteilhafterweise ist das Versteifungselement vollumfänglich von dem Weichmaterial des flanschartigen Rands umschlossen. Ein vom Weichmaterial vollumfänglich umschlossener Verstärkungsring weist keinen Übergang zwischen dem Weichmaterial und dem Hartmaterial auf und ist folglich hygienischer und einfacher zu reinigen.

Das Versteifungselement kann zur Ausbildung einer vollumfänglichen oder teilumfänglichen Angriffsfläche dienen. Hierbei ist unerheblich, ob die Angriffsfläche unmittelbar beziehungsweise direkt oder aber mittelbar beziehungsweise indirekt ausgebildet wird. Bei einer teilumfänglichen Ausbildung ist es notwendig, die Kapsel derart in der Kapsel-Getränkemaschine zu positionieren, dass das Auswurfelement der Kapsel-Getränkemaschine an der teilumfänglichen Angriffsfläche angreift. Vorteilhafterweise ist bei einer teilumfänglichen Ausgestaltung der Angriffsfläche an der Kapsel eine Markierung angebracht, welche es dem Nutzer ermöglicht die Kapsel entsprechend in der Kapsel-Getränkemaschine zu positionieren, wodurch das Auswurfelement an der teilumfänglichen Angriffsfläche angreift.

Vorteilhafterweise weist der Boden des Kapselbehälters mehrere Durchgangsöffnungen auf. Dabei können die Durchgangsöffnungen in unterschiedlicher Form, insbesondere als kreisrunde, ovale oder mehreckige Durchgangsöffnungen, ausgebildet sein. Vorteilhafterweise weist der Kapselbehälter eine runde oder eckige Ausgestaltung auf.

Eine mehrfachverwendbare Kapsel nach Anspruch 2 ermöglicht einen gleichmäßigen Druckaufbau in der Kapsel während des Extraktions- bzw. Brühprozesses, da sich das Weichmaterial flexibel an die Form des Siebeinsatzes anpasst. Zusätzlich zu der bereits erwähnten Dichtfunktion zur Brühkammer der Kapsel-Getränkemaschine hat der aus Weichmaterial ausgebildete Kapselgrundkörper eine Dichtfunktion zum Siebeinsatz. Diese zusätzliche Dichtfunktion ermöglicht den gleichmäßigen Druckaufbau in der Kapsel während des Extraktions- bzw. Brühprozesses.

Eine mehrfach verwendbare Kapsel nach Anspruch 3 gewährleistet auf einfache Weise das Verschließen der Öffnung des Kapselbehälters durch den Siebeinsatz. Der Absatz ist an der Innenseite der Seitenwand des Kapselgrundkörpers ausgebildet. Der Absatz verhindert, dass der Siebeinsatz zu tief in die Öffnung des Kapselbehälters eingedrückt wird. Ein zu tiefes Eindrücken des Siebeinsatzes in die Öffnung des Kapselbehälters beeinträchtigt die Dichtfunktion zwischen dem Weichmaterial des Kapselgrundkörpers und dem Siebeinsatz. Vorteilhafterweise kann der Absatz an der Innenseite des Kapselgrundkörpers vollumfänglich ausgebildet sein. Auch eine teilumfängliche Ausbildung des Absatzes ist möglich.

Bei einer mehrfach verwendbaren Kapsel nach Anspruch 4 ist eine unlösbare Verbindung zwischen dem Versteifungselement und dem Kapselgrundkörper gewährleistet. Eine derartige unlösbare Verbindung gewährleistet, dass die Kapsel nach dem Extraktions- bzw. Brühprozess aus der Kapsel-Getränkemaschine ausgeworfen wird, obwohl das Auswurfelement der Kapsel-Getränkemaschine lediglich an der Angriffsfläche angreift. Vorteilhafterweise wird die stoffschlüssige Verbindung durch Kleben, Schweißen oder Vulkanisation herbeigeführt.

Eine mehrfach verwendbare Kapsel nach Anspruch 5 ermöglicht eine besonders feste Verbindung zwischen dem Hartmaterial bzw. dem Versteifungsmaterial des Versteifungselements und dem Weichmaterial des Kapselgrundkörpers. Dabei weist das Versteifungselement Durchgangsausnehmungen auf, welche vom Weichmaterial des Kapselgrundkörpers umgeben sind. Vorteilhafterweise sind die Durchgangsausnehmungen als Bohrungen ausgebildet. Die Durchgangsausnehmungen können auch in Form von Nuten oder anderweitigen ähnlichen Ausnehmungen im Versteifungselement ausgebildet sein. Die Stege zwischen den Durchgangsausnehmungen im Versteifungselement dienen dabei insbesondere als zusätzliche Bewehrung, wodurch eine höhere Druck- und Zugfestigkeit in der Verbindung zwischen dem Weichmaterial des Kapselgrundkörpers und dem Hartmaterial des Versteifungselements gewährleistet wird.

Eine mehrfach verwendbare Kapsel nach Anspruch 6 ermöglicht eine besonders einfache Herstellung der Kapsel, indem das Versteifungselement im Querschnitt C-förmig ausgebildet ist. Folglich kann bei der Herstellung der erfindungsgemäßen Kapsel das C-förmige Versteifungselement in einfacher Weise mit dem gegenteilig geformten Weichmaterial des Kapselgrundkörpers formschlüssig und/oder stoffschlüssig verbunden werden.

Vorteilhafterweise bildet das C-förmige Versteifungselement an seiner offenen Seite in Richtung von einer Mittel-Längs-Achse des Kapselbehälters Hinterschneidungen aus. Die Hinterschneidungen formen dabei eine Ausnehmung zur Aufnahme des Weichmaterials, wodurch eine besonders feste, formschlüssige und/oder stoffschlüssige Verbindung ausgebildet wird. Die beiden Schenkel des C-förmigen Verstärkungselements können gleich oder unterschiedlich lang ausgebildet sein. Das C-förmige Verstärkungselement ist derart ausgebildet, dass an dem umlaufenden flanschartigen Rand des Kapselgrundkörpers die dem Boden zugewandte umlaufende Dichtfläche ausgebildet wird.

Eine mehrfach verwendbare Kapsel nach Anspruch 7 ermöglicht eine besonders einfache Handhabung. Die umlaufende Angriffsfläche ermöglicht ein einfaches Positionieren der Kapsel in der Kapsel-Getränkemaschine, da das Auswurfselement der Kapsel-Getränkemaschine an einer in Umfangsrichtung beliebigen Stelle an der Angriffsfläche angreifen kann.

Eine mehrfach verwendbare Kapsel nach Anspruch 8 ermöglicht eine besonders einfache Reinigung. Dabei ist das Weichmaterial derart flexibel ausgebildet, dass der Kapselgrundkörper durch die Öffnung bzw. durch das Versteifungselement umstülpbar ist. Infolgedessen kann ein Großteil des ausgepressten Getränkerohmaterials, welches sich nach dem Extraktions- bzw. Brühprozess in dem Kapselbehälter befindet, einfach herausgedrückt und entsorgt werden. Zudem lassen sich Rückstände des ausgepressten Getränkerohmaterials, welche gegebenenfalls an der Innenseite des Kapselbehälters haften bleiben, einfach entfernen, da die Innenseite des Kapselgrundkörpers durch das Umstülpen nach außen gekehrt ist. Zum Entfernen der Rückstände eignet sich insbesondere ein kurzes Abspülen der Kapsel unter fließendem Wasser oder das Eintauchen der Kapsel in Wasser. Zur Wiederverwendung der erfindungsgemäßen Kapsel ist lediglich das Auswerfen und Entsorgen des ausgepressten Getränkerohmaterials notwendig.

Eine mehrfach verwendbare Kapsel nach Anspruch 9 ermöglicht die Ausbildung einer ausreichend festen Angriffsfläche.

Eine mehrfach verwendbare Kapsel nach Anspruch 10 ist einfach handhabbar. Das Weichmaterial ist ein Elastomer, insbesondere Silikonkautschuk oder ein thermoplastisches Elastomer. Vorteilhafterweise ist das Weichmaterial insbesondere ein keimresistentes bzw. ein steriles Material, um einer Verschmutzung der erfindungsgemäßen Kapsel vorzubeugen. Vorteilhafterweise weist das Weichmaterial Antihaft-Eigenschaften auf. Insbesondere ist das Weichmaterial lebensmittelecht und enthält keine Schadstoffe.

Eine mehrfach verwendbare Kapsel nach Anspruch 11 ist zuverlässig handhabbar. Der Siebeinsatz ist aus Metall, insbesondere Aluminium oder Edelstahl, einem keramischen Material oder einem Hartkunststoff, insbesondere ein harter Silikonkautschuk, Polyamid, Polypropylen, Polyethylen, Polycarbonat, Polyethylenterephthalat, Polytetrafluorethylen oder Polyethylennaphthalat. Vorteilhafterweise werden die Durchgangsöffnungen des Siebeinsatzes durch eine gitterförmige Struktur, insbesondere ein feines Drahtgitter, ausgebildet. Die Durchgangsöffnungen verjüngen sich insbesondere in Richtung eines Aufnahmeraums des Kapselbehälters. Vorteilhafterweise sind die Durchgangsöffnungen konisch ausgebildet. Dadurch wird ein Festsetzen von Partikeln des Getränkerohmaterials im Siebeinsatz verhindert. Zudem ist die Reinigung des Siebeinsatzes erleichtert.

Vorteilhafterweise dienen die Durchgangsöffnungen des Siebeinsatzes als Filter. Zweckmäßig ist es, an dem Siebeinsatzes eine Membran anzubringen, welche die Durchgangsöffnungen abdecken und folglich als Filter dient. Dabei kann die zusätzlich angebrachte Membran an der Innen- bzw. Außenseite des Siebeinsatzes oder in diesem angebracht sein. Das Einbringen des Siebeinsatzes in der Öffnung des Kapselbehälters ist durch einfaches Einstecken möglich.

Eine mehrfachverwendbare Kapsel nach Anspruch 12 gewährleistet auf einfache Weise das Verschließen der Öffnung des Kapselbehälters durch den Siebeinsatz. Dadurch, dass sich der Querschnitt des Siebeinsatzes verjüngt, wird verhindert, dass der Siebeinsatz zu tief in die Öffnung des Kapselbehälters eingedrückt und dass der Siebeinsatz falsch herum in die Öffnung eingesetzt wird. Dabei kann sich der Querschnitt des Siebeinsatzes über den gesamten Siebeinsatz oder sich lediglich in einem Teilabschnitt des Siebeinsatzes verjüngen. Der Siebeinsatz mit dem sich verjüngendem Querschnitt kann dabei kreisrund, oval oder mehreckig ausgebildet sein. Vorteilhafterweise weist der Siebeinsatz eine runde oder eckige Ausgestaltung auf.

Eine nicht-erfindungsgemäße Befüllvorrichtung umfasst einen Behälter zum Aufbewahren von Getränkerohmaterial, wobei der Behälter einen Innenraum und eine Halterung zur Aufnahme eines Kapselbehälters der Kapsel aufweist, und einen Deckel zum Verschließen des Behälters, wobei die Halterung im Innenraum des Behälters angeordnet ist. Die Befüllvorrichtung ermöglicht auf einfache Weise eine Befüllung der erfindungsgemäßen mehrfach verwendbaren Kapsel.

Dadurch, dass die Befüllvorrichtung einen Behälter zum Aufbewahren von Getränkerohmaterial und eine Halterung im Innenraum des Behälters aufweist, ermöglicht die Befüllvorrichtung ein einfaches und schmutzfreies Wiederbefüllen einer erfindungsgemäßen mehrfach verwendbaren Kapsel. Die Anordnung der Halterung im Innenraum hat den Vorteil, dass beim Befüllen überschüssiges Rohmaterial zurück in den Behälter fällt und den Arbeitsplatz nicht verschmutzt. Überschüssiges Material, welches gegebenenfalls über den Kapselbehälter steht, kann auf einfache Weise in den Behälter der Befüllvorrichtung zurückbefördert werden. Zusätzlich weist eine Befüllvorrichtung einen Deckel zum Verschließen des Behälters auf. Der Behälter ist durch den Deckel luftdicht verschlossen. Vorteilhafterweise kann eine mehrfach verwendbare Kapsel vorbereitend befüllt und bei verschlossenem Behälter trocken und ohne Verlust des Aromas in der im Innenraum angeordneten Halterung gelagert werden.

Die Halterung kann eine erste Kontaktfläche zum Auflegen des umlaufenden flanschartigen Rands und/oder des Versteifungselements des Kapselbehälters ausbilden. Dies gewährleistet eine vereinfachte Befüllung. Vorteilhafterweise ist die erste Kontaktfläche der Halterung derart ausgebildet, dass das aus Hartmaterial ausgebildete Versteifungselement bzw. die Angriffsfläche an der ersten Kontaktfläche aufliegt. Auf Grund dieser ersten Kontaktfläche ist es einem Nutzer möglich, beim Befüllen der Kapsel mit dem Getränkerohmaterial dieses in dem Kapselbehälter zu komprimieren, ohne dass der Kapselbehälter in die Halterung absackt. Durch entsprechende Komprimierung des Getränkerohmaterials im Kapselbehälter kann die Intensität des zubereiteten Getränks beeinflusst werden.

Die Halterung kann eine zweite kegelstumpfförmige Kontaktfläche zum Anlegen der Seitenwand des Kapselbehälters ausbilden. Diese gewährleistet eine einfache Befüllung einer mehrfach verwendbaren Kapsel, da der aus Weichmaterial bestehende Kapselgrundkörper beim Befüllen von der zweiten kegelstumpfförmigen Kontaktfläche gestützt wird. Vorteilhafterweise verhindert die passgenaue Aufnahme des Kapselbehälters in der Halterung der Befüllvorrichtung, dass der Siebeinsatz zu tief in die Öffnung der Kapsel eingedrückt wird. Gleichzeitig verhindert die zweite kegelstumpfförmige Kontaktfläche eine Verschmutzung der Seitenwand durch das Getränkerohmaterial, was besonders bei mit Wasser ausgespülten und noch feuchten Kapseln einen großen Vorteil bietet, da das Getränkerohmaterial in diesem Fall besonders stark an der Kapsel haftet. Ein weiterer Vorteil ist, dass eine Kapsel auf Vorrat befüllt und im verschlossenen Behälter ohne Aromaverlust aufbewahrt werden kann.

Der Behälter kann zwei oder mehr Halterungen im Innenraum aufweisen. Folglich können vorteilhafterweise mehrere Kapseln vorbereitend befüllt bzw. trocken und ohne Aromaverlust gelagert werden, wenn der Deckel den Behälter luftdicht verschließt.

Der Innenraum des Behälters kann mehrere Segmente zur Aufnahme unterschiedlicher Getränkerohmaterialien aufweisen. Dies ermöglicht ein Befüllen der mehrfach verwendbaren Kapsel mit unterschiedlichen Getränkerohmaterialien. Der Innenraum des Behälters weist dabei mehrere Segmente auf, welche mit unterschiedlichen Getränkerohmaterialien befüllt werden können. Dabei ist die Halterung im Innenraum des Behälters derart angeordnet, dass ein Befüllen weiterhin möglich ist und die Getränkerohmaterialien eines jeden Segments weiterhin einfach abschöpfbar sind.

Jedes der Segmente kann mindestens eine Halterung im Innenraum des Behälters zur Aufnahme eines Kapselbehälters aufweisen. Dabei sind die jeweiligen Halterungen der Segmente derart im Innenraum des Behälters angeordnet, dass ein Befüllen weiterhin möglich ist und die Getränkerohmaterialien eines jeden Segments weiterhin einfach abschöpfbar sind.

Der Erfindung liegt weiterhin die Aufgabe zugrunde, ein Verfahren zu schaffen, dass in einfacher Weise das Zubereiten von Getränken mittels einer Kapsel-Getränkemaschine mit einer erfindungsgemäßen mehrfach verwendbaren Kapsel ermöglicht.

Diese Aufgabe wird durch ein Verfahren mit den Merkmalen des Anspruchs 13 gelöst. Insbesondere kann das erfindungsgemäße Verfahren auch mit den Merkmalen der Ansprüche 1 bis 12 weitergebildet werden. Die Vorteile des erfindungsgemäßen Verfahrens entsprechen den bereits beschriebenen Vorteilen der mehrfach verwendbaren Kapsel bzw. der Befüllvorrichtung. Die bereits beschriebenen Vorteile führen dazu, dass das erfindungsgemäße Verfahren zur Zubereitung von Getränken mit einer erfindungsgemäßen mehrfach verwendbaren Kapsel einfach und zuverlässig handhabbar ist. Das Fluid ist insbesondere eine Flüssigkeit, beispielsweise Wasser.

Das Verfahren kann den zusätzlichen Schritt umfassen, dass die Kapsel in der Kapsel-Getränkemaschine abgedichtet wird, indem das Weichmaterial des Kapselgrundkörpers gegen den Siebeinsatz drückt.

Das Verfahren kann zudem den Schritt aufweisen, dass das Entleeren der Kapsel durch Umstülpen des Kapselgrundkörpers erfolgt.

Das Verfahren kann den Schritt umfassen, dass das Wiederbefüllen des Kapselbehälters mittels der Befüllvorrichtung erfolgt.

Weitere Merkmale, Vorteile und Einzelheiten der Erfindung ergeben sich aus der nachfolgenden Beschreibung der Ausführungsbeispiele. Es zeigen:
- Fig. 1: eine perspektivische Darstellung einer erfindungsgemäßen mehrfach verwendbaren Kapsel gemäß einem ersten Ausführungsbeispiel,
- Fig. 2: eine Draufsicht auf die mehrfach verwendbare Kapsel gemäß Figur 1,
- Fig. 3: einen Schnitt durch die mehrfach verwendbare Kapsel entlang der Schnittlinie III-III in Figur 2,
- Fig. 4: eine vergrößerte Schnittdarstellung eines umlaufenden flanschartigen Rands und eines daran angeordneten Versteifungselements aus Figur 3, wobei der Schnitt das Versteifungselement zwischen zwei Durchgangsausnehmungen zeigt,
- Fig. 5: eine vergrößerte Schnittdarstellung des umlaufenden flanschartigen Rands und des daran angeordneten Versteifungselements aus Figur 3, wobei der Schnitt eine Durchgangsöffnung des Versteifungselements zeigt,
- Fig. 6: einen Schnitt durch die mehrfach verwendbare Kapsel aus Figur 1, wobei die Kapsel in einer Brühkammer einer Kapsel-Getränkemaschine angeordnet ist,
- Fig. 7: einen Schnitt durch die umgestülpte mehrfach verwendbare Kapsel,
- Fig. 8: eine vergrößerte Darstellung des umlaufenden flanschartigen Rands und des Versteifungselements einer mehrfach verwendbaren Kapsel gemäß einem zweiten Ausführungsbeispiel,
- Fig. 9: eine vergrößerte Darstellung des Siebeinsatzes einer mehrfach verwendbaren Kapsel gemäß einem dritten Ausführungsbeispiel,
- Fig. 10: eine vergrößerte Darstellung des umlaufenden flanschartigen Rands und des Versteifungselements einer mehrfach verwendbaren Kapsel gemäß einem vierten Ausführungsbeispiel,
- Fig. 11: eine Befüllvorrichtung gemäß einem ersten Ausführungsbeispiel mit einer Halterung im Innenraum, wobei eine mehrfach verwendbare Kapsel in der Halterung angeordnet ist,
- Fig. 12: einen Schnitt durch die Halterung, in welcher eine mehrfach verwendbare Kapsel angeordnet ist, und
- Fig. 13: eine Draufsicht auf eine Befüllvorrichtung gemäß einem zweiten Ausführungsbeispiel, wobei die Befüllvorrichtung mehrere Segmente und Halterungen aufweist.

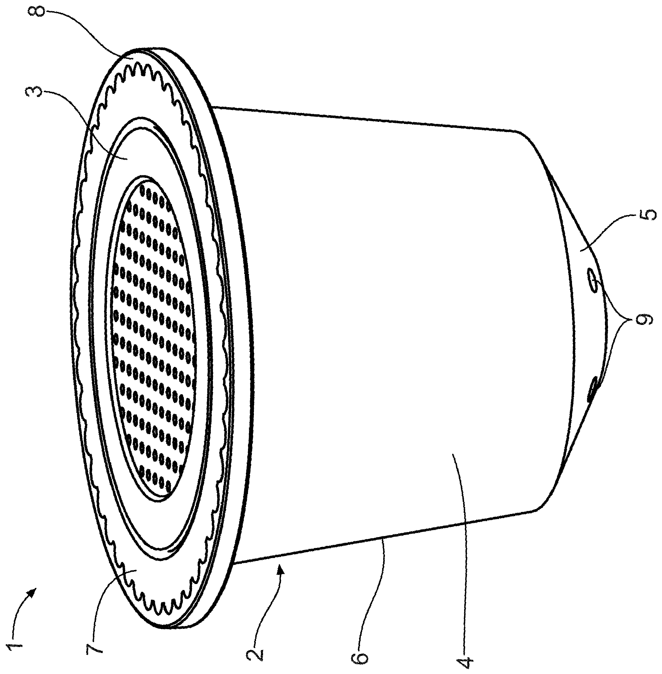

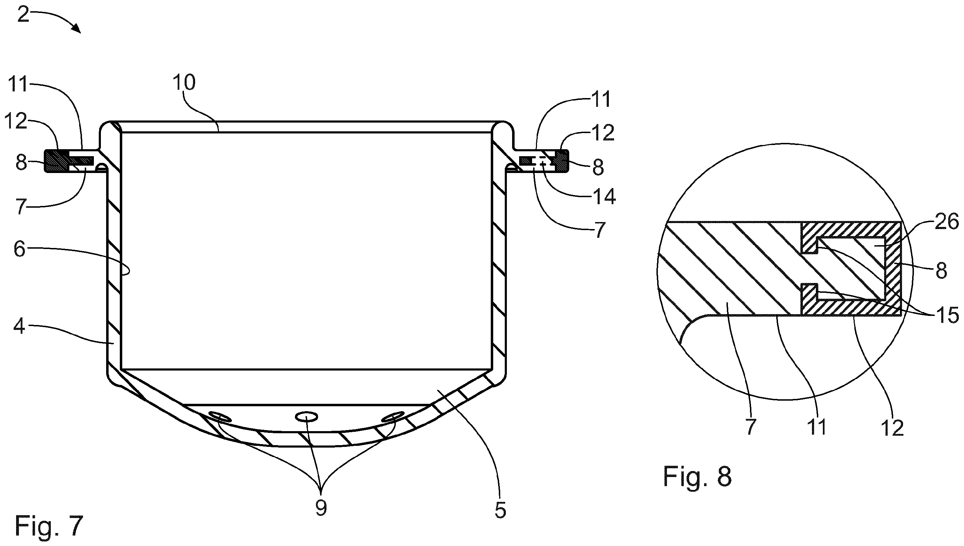

Die Figuren 1 und 7 zeigen ein erstes Ausführungsbeispiel der mehrfach verwendbaren Kapsel 1 im geschlossenen Zustand. Die mehrfach verwendbare Kapsel 1 umfasst einen Kapselbehälter 2 und einen Siebeinsatz 3 zum Verschließen des Kapselbehälters 2.

Der Kapselbehälter 2 weist dabei einen Kapselgrundkörper 4 zum Aufnehmen eines Getränkerohmaterials auf, welcher einen Boden 5, eine Seitenwand 6 und einen umlaufenden flanschartigen Rand 7 umfasst. Der Rand 7 ist endseitig an der Seitenwand 6 an einer Oberseite des Kapselgrundkörpers 4 ausgebildet und erstreckt sich in radialer Richtung zu einer Mittel-Längs-Achse M des Kapselbehälters 2. Die Seitenwand 6 bildet an der Oberseite des Kapselgrundkörpers 4 eine Öffnung 10 aus, in welche der Siebeinsatz 3 zum Verschließen des Kapselbehälters 2 passgenau eingesetzt wird. Der Kapselgrundkörper 4 ist aus einem Weichmaterial ausgebildet. In den beschriebenen Ausführungsbeispielen ist das Weichmaterial ein Silikonkautschuk, allerdings sind weitere Materialien ebenfalls denkbar. Die Seitenwand 6 ist umlaufend und in Richtung des Bodens 5 konisch ausgebildet. Der Boden 5 weist eine konische Form auf. Ferner sind im Bereich des Bodens 5 mehrere kreisrunde Durchgangsöffnungen 9 angeordnet. Durch die Durchgangsöffnungen 9 wird während des Extraktions- bzw. des Brühprozesses dem befüllten Kapselbehälter 2 und dem darin befindlichen Getränkerohmaterial unter Druck Wasser zugeführt.

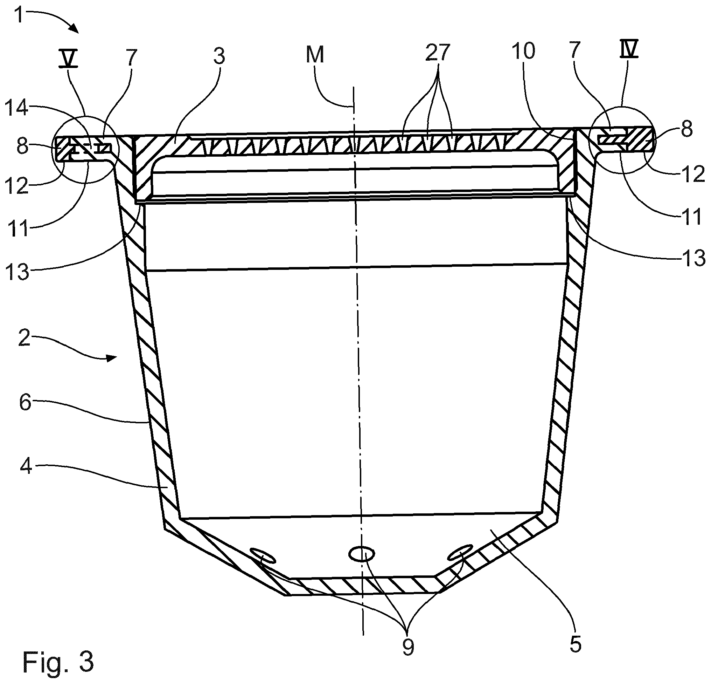

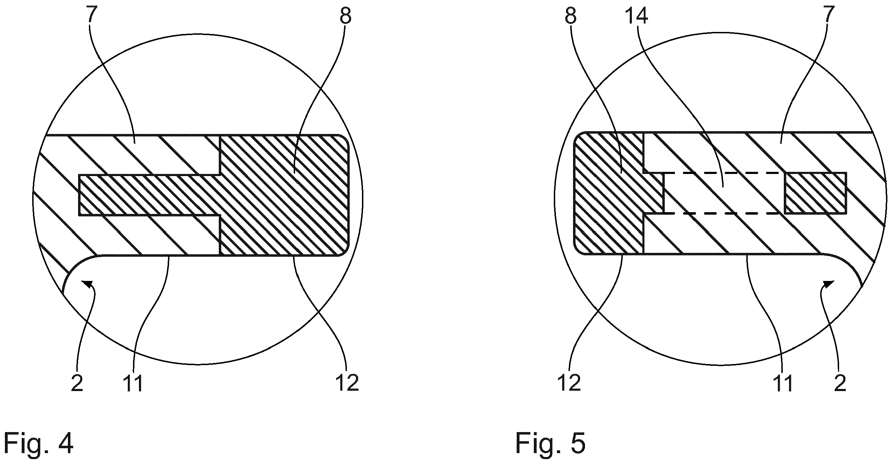

Der Kapselbehälter 2 weist neben dem Kapselgrundkörper 4 ein Versteifungselement 8 auf, welches aus einem Hartkunststoff als Hartmaterial ausgebildet ist. Dabei ist das Versteifungselement 8 an dem umlaufenden flanschartigen Rand 7 des Kapselgrundkörpers 4 derart angeordnet, dass der umlaufende flanschartige Rand 7 eine dem Boden 5 zugewandte umlaufende Dichtfläche 11 ausbildet. Zusätzlich bildet das Versteifungselement 8 eine Angriffsfläche 12 aus. Die Angriffsfläche 12 ist umlaufend ausgebildet und umgibt radial zu der Mittel-Längs-Achse M betrachtet die Dichtfläche 11. Die umlaufende Dichtfläche 11 und die Angriffsfläche 12 sind insbesondere in den Figuren 3 bis 5 dargestellt.

Das Versteifungselement 8 weist Durchgangsausnehmungen 14 auf, welche vom Silikonkautschuk des Kapselgrundkörpers 4 gefüllt sind, so dass das Versteifungselement 8 von dem Silikonkautschuk umgeben ist. Das Versteifungselement 8 und der Kapselgrundkörper 4 sind somit an dem umlaufenden flanschartigen Rand 7 stoff- und formschlüssig miteinander verbunden.

An der Innenseite der Seitenwand 6 des Kapselgrundkörpers 4 ist ein Absatz 13 angeordnet. Auf dem Absatz 13 wird der Siebeinsatz 3 zum Verschließen des Kapselbehälters 2 aufgelegt. Durch den Absatz 13 wird verhindert, dass der Siebeinsatz 3 zu tief in dem Kapselgrundkörper 4 eingedrückt wird. Der Absatz 13 ist in Figur 3 ersichtlich.

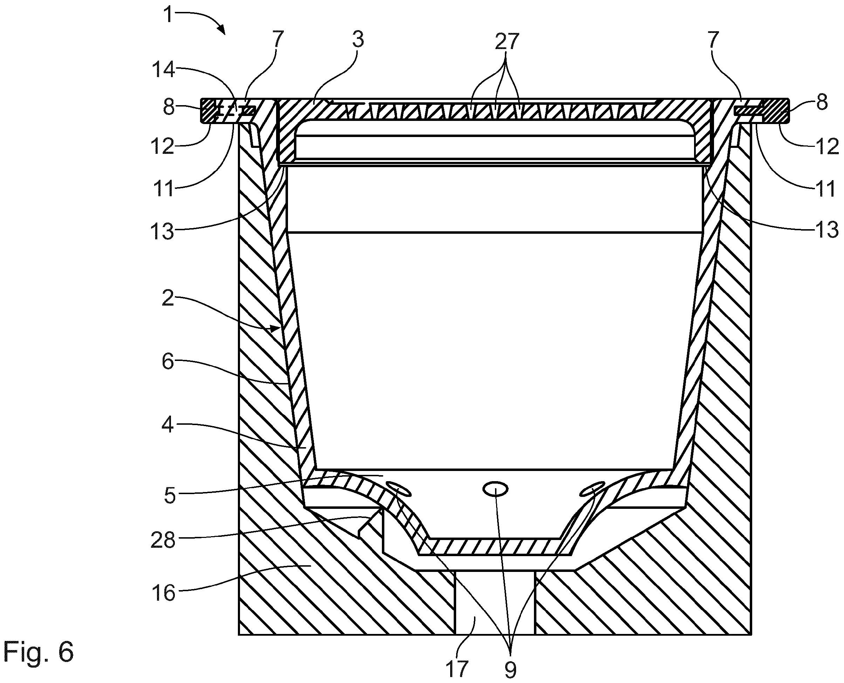

Wird die befüllte mehrfach verwendbare Kapsel 1 in einer Kapsel-Getränkemaschine angeordnet, wird die Brühkammer 16 der Kapsel-Getränkemaschine mittels der umlaufenden Dichtungsfläche 11 abgedichtet. Dies ist in Figur 6 ersichtlich. Während des Extraktions- bzw. Brühprozesses wird durch eine Einspritzvorrichtung 17 der Kapsel-Getränkemaschine ein Fluid in Form von Wasser unter Druck über die Durchgangsöffnungen 9 der Kapsel 1 zugeführt, wobei das Fluid dann das in der Kapsel 1 befindliche Getränkerohmaterial löst und als Zubereitung über Ausströmöffnungen 27 des Siebeinsatzes 3 die Kapsel 1 verlässt. Die dargestellte Brühkammer 16 umfasst dabei herstellerspezifische Vorsprünge 28. Aufgrund des flexiblen Silikonkautschuks des Kapselgrundkörpers 4 passt sich die mehrfach verwendbare Kapsel 1 in einfacher Weise an die herstellerspezifischen Vorsprünge 28 an. Zusätzlich wird während des Extraktions- bzw. Brühprozesses der Kapselbehälter 2 am Siebeinsatz 3 durch den aus Silikonkautschuk ausgebildeten Kapselgrundkörper 4 abgedichtet. Es ist kein zusätzliches Dichtelement erforderlich. Nach dem Extraktions- bzw. Brühprozess wird die mehrfach verwendbare Kapsel 1 aus der Brühkammer 16 und aus der Kapsel-Getränkemaschine ausgeworfen. Hierbei greift ein Auswurfelement der Kapsel-Getränkemaschine an der vollumfänglich umlaufenden Angriffsfläche 12 an und wirft die benutzte Kapsel 1 aus der Kapsel-Getränkemaschine aus.

In Figur 7 ist die Kapsel 1 umgestülpt dargestellt. Da der Kapselgrundkörper 4 auf Grund des Silikonkautschuks flexibel verformbar ist, ist der Kapselgrundkörper 4 durch die Öffnung 10 und durch das Versteifungselement 8 umstülpbar. Das ausgepresste Getränkerohmaterial kann folglich nach dem Extraktions- bzw. Brühprozess in einfacher Weise aus dem Kapselbehälter 4 ausgeworfen und entsorgt werden. Gleichzeitig ist ein einfaches Reinigen der Innenseite der Seitenwand 6 möglich, da durch das Umstülpen des Kapselbehälters 2 die Innenseite der Seitenwand 6 entsprechend nach außen zeigt.

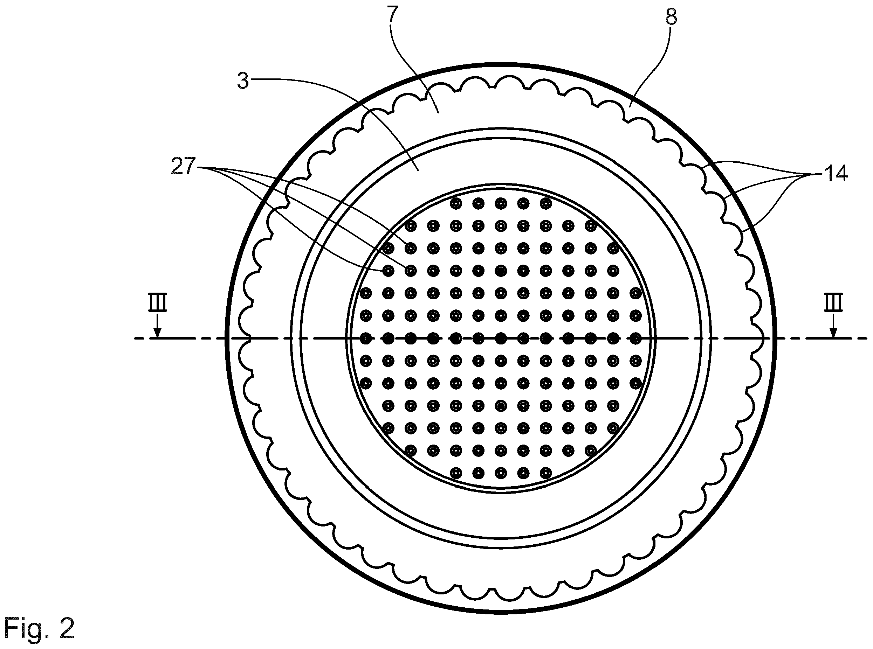

Anhand von Figur 8 wird ein zweites Ausführungsbeispiel der mehrfach verwendbaren Kapsel 1 beschrieben. Konstruktiv gleiche Komponenten haben die gleiche Bezugsziffer wie in den vorherigen Figuren 1 bis 7. In dem zweiten Ausführungsbeispiel ist das Versteifungselement 8 der mehrfach verwendbaren Kapsel 1 C-förmig ausgebildet. Dabei sind beide Schenkel des C-förmigen Versteifungselements 8 gleich lang. Das C-förmige Versteifungselement 8 bildet in Richtung der Mittel-Längs-Achse M Hinterschneidungen 15 aus. Die Hinterschneidungen 15 bilden dabei eine Ausnehmung 26 aus. Die Ausnehmung 26 dient dabei zur Aufnahme des Weichmaterials des Kapselgrundkörpers 4, wodurch das C-förmige Versteifungselement 8 mit dem umlaufenden flanschartigen Rand 7 des Kapselgrundkörpers 4 formschlüssig verbunden ist. Der umlaufende flanschartige Rand 7 bildet die Dichtfläche 11 zum Abdichten der Brühkammer der Kapsel-Getränkemaschine und das Versteifungselement 8 die umlaufende Angriffsfläche 12 zum Angreifen eines Auswurfelements einer Kapsel-Getränkemaschine aus.

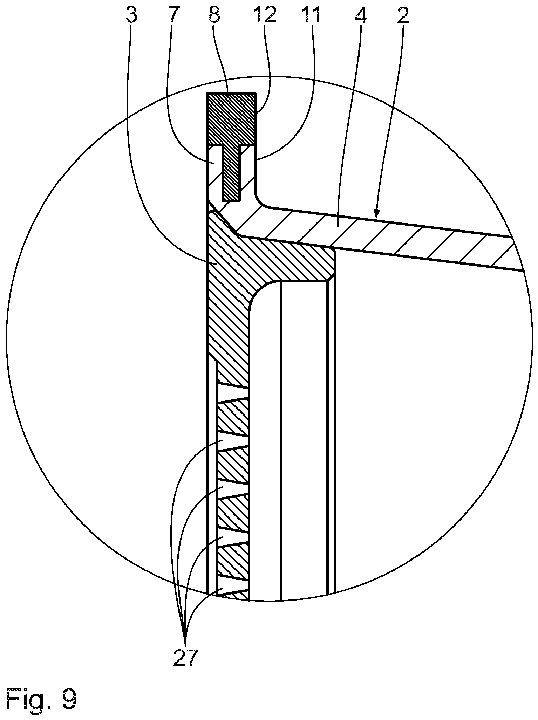

Anhand von Figur 9 wird ein drittes Ausführungsbeispiel der mehrfach verwendbaren Kapsel 1 beschrieben. Konstruktiv gleiche Komponenten haben die gleiche Bezugsziffer wie in den vorherigen Figuren 1 bis 8. In dem dritten Ausführungsbeispiel weist der Siebeinsatz 3 der mehrfach verwendbaren Kapsel 1 in einem Teilabschnitt an dessen Oberseite einen sich verjüngenden Querschnitt auf und verschließt die Öffnung 10 des Kapselgrundkörpers 4. Der Siebeinsatz 3 ist in dem Teilabschnitt kegelstumpfförmig ausgebildet.

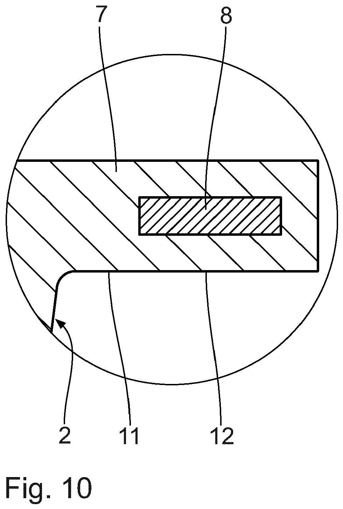

Aus Figur 10 ist ein viertes Ausführungsbeispiel der mehrfach verwendbaren Kapsel 1 ersichtlich. Konstruktiv gleiche Komponenten haben die gleiche Bezugsziffer wie in den vorherigen Figuren 1 bis 9. Bei dem vierten Ausführungsbeispiel ist das Versteifungselement 8 vollumfänglich vom Weichmaterial des flanschartigen Rands 7 umschlossen. Das Versteifungselement 8 festigt den Rand 7, wodurch der Rand 7 die Angriffsfläche 12 ausbildet, an welcher das Auswurfelement angreift. Gleichzeitig bildet der Rand 7 die Dichtfläche 11 zum Abdichten der Brühkammer der Kapsel-Getränkemaschine aus.

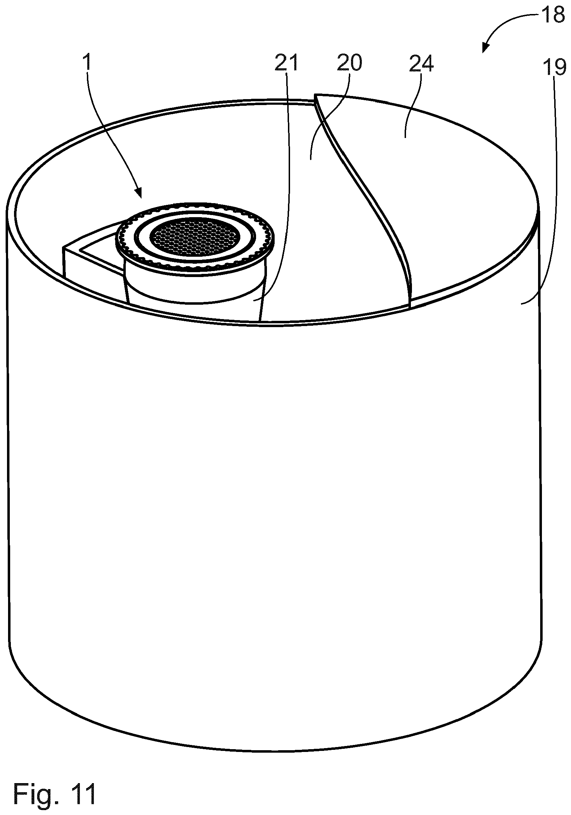

Die Figur 11 zeigt eine Befüllvorrichtung 18 gemäß einem ersten Ausführungsbeispiel. Die Befüllvorrichtung 18 umfasst einen Behälter 19, welcher durch einen Deckel 24 luftundurchlässig verschließbar ist. Der Behälter 19 dient zum Aufbewahren von Getränkerohmaterial. Dabei umfasst der Behälter 19 einen Innenraum 20, in welchem eine Halterung 21 zur Aufnahme eines Kapselbehälters 2 angebracht ist. Dabei weist die Halterung 21 eine erste Kontaktfläche 22 zum Auflegen des umlaufenden flanschartigen Rands 7 und/oder des Versteifungselements 8 auf.

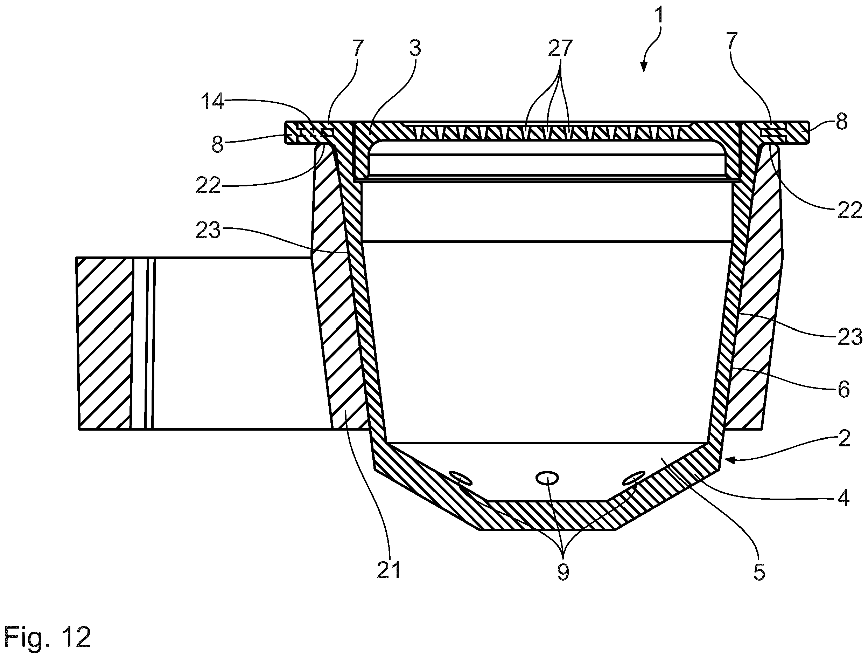

Neben der ersten Kontaktfläche 22 weist die Halterung 21 eine zweite kegelstumpfförmige Kontaktfläche 23 auf. Diese zweite kegelstumpfförmige Kontaktfläche 23 dient zum Anlegen der Seitenwand 6 des Kapselgrundkörpers 4. Da der Kapselgrundkörper 4 aus einem Weichmaterial ausgebildet ist, dient die zweite kegelstumpfförmige Kontaktfläche 23 der Halterung 21 dazu, diesen beim Befüllen abzustützen. Die erste Kontaktfläche 22 und die zweite kegelstumpfförmige Kontaktfläche 23 sind insbesondere aus der Figur 12 ersichtlich.

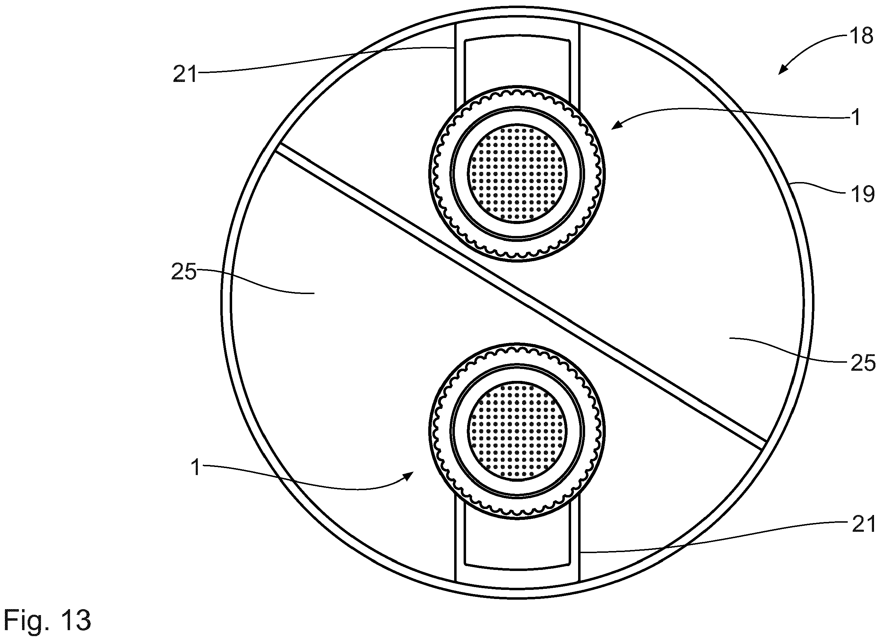

Anhand der Figur 13 wird ein zweites Ausführungsbeispiel der Befüllvorrichtung 18 beschrieben. Konstruktiv gleiche Komponenten haben die gleiche Bezugsziffer wie in den Figuren 10 und 11. Die Figur 12 zeigt eine Befüllvorrichtung 18 in einem unverschlossenen Zustand. Der Behälter 19 umfasst dabei in seinem Innenraum 20 zwei Halterungen 21 zur Aufnahme von Kapselbehältern 2. Zusätzlich sind im Innenraum 20 des Behälters 19 mehrere Segmente 25 ausgebildet. Die Segmente 25 dienen zur Aufnahme unterschiedlicher Getränkerohmaterialien. Die Halterungen 21 sind in den Segmenten 25 versetzt im Innenraum 20 des Behälters 19 angeordnet. Durch den Versatz der Halterungen 21 entstehen bei den Segmenten 25 Freiflächen, über welche ein Nutzer das darin gelagerte Getränkerohmaterial mit einer entsprechenden Füllhilfe entnehmen und den Kapselbehälter 2 befüllen kann.

Das Verfahren zur Zubereitung von Getränken mit einer erfindungsgemäßen mehrfach verwendbaren Kapsel 1 und einer erfindungsgemäßen Befüllvorrichtung 18 ist wie folgt:
Der leere Kapselbehälter 2 wird in der Halterung 21 des Behälters 19 der Befüllvorrichtung 18 angeordnet und mit dem Getränkerohmaterial, welches im Behälter 19 gelagert ist, befüllt. Überschüssiges Getränkerohmaterial, welches beim Befüllen des Kapselbehälters 2 anfällt, kann auf einfache Weise im Behälter 19 entfernt werden, wodurch der Arbeitsplatz nicht verschmutzt wird. Als nächstes wird der Kapselbehälter 2 durch den Siebeinsatz 3 passgenau verschlossen. Dabei liegt der Siebeinsatz 3 auf dem Absatz 23 auf. Daraufhin ordnet ein Benutzer die befüllte Kapsel 1 in der Kapsel-Getränkemaschine an. Die Brühkammer 16 der Kapsel-Getränkemaschine wird mittels der dem Boden 5 zugewandten umlaufenden Dichtfläche 11 abgedichtet. In einem nächsten Schritt wird der Extraktions- bzw. Brühprozess eingeleitet. Die Einspritzvorrichtung 17 der Kapsel-Getränkemaschine drückt Wasser in die Brühkammer 16 und durch die Durchgangsöffnungen 9 in die Kapsel 1. Das in der Kapsel 1 befindliche Getränkerohmaterial wird durch das Wasser gelöst und als Zubereitung über die Ausströmöffnungen 27 des Siebeinsatzes 3 aus der Kapsel 1 herausgepresst. Nach dem Beenden des Extraktions- bzw. Brühprozesses greift ein Auswurfelement der Kapsel-Getränkemaschine an der Angriffsfläche 12 an, und befördert die Kapsel 1 mit dem ausgepressten Getränkerohmaterial aus der Brühkammer 16. Aus der benutzten Kapsel 1 wird das ausgepresste Getränkerohmaterial durch Umstülpen des aus Silikonkautschuk ausgebildeten Kapselgrundkörpers 4 durch die Öffnung 10 bzw. durch das Versteifungselement 8 ausgeworfen und entsorgt. Bei Bedarf kann die umgestülpte Kapsel 1 mit weiterführenden Reinigungsschritten von Rückständen befreit werden. Eine weiterführende Reinigung ist nicht zwingend erforderlich. Der entleerte Kapselbehälter 2 wird für eine erneute Benutzung in der beschriebenen Weise wieder befüllt.

## Patentansprüche

1. Mehrfach verwendbare Kapsel zur Zubereitung von Getränken mittels einer Kapsel-Getränkemaschine, umfassend
- einen Kapselbehälter (2)
-- mit einem Kapselgrundkörper (4) zum Aufnehmen eines Getränkerohmaterials, der
--- einen Boden (5) mit mindestens einer Durchgangsöffnung (9) und
--- eine Seitenwand (6), welche eine Öffnung (10) ausbildet, umfasst und
-- mit einem Versteifungselement (8) zur Ausbildung einer Angriffsfläche (12), welches aus einem Hartmaterial ausgebildet ist,
- einen Siebeinsatz (3) zum Verschließen des Kapselbehälters (2),
**dadurch gekennzeichnet,**
**dass** der Kapselgrundkörper (4) einen umlaufenden flanschartigen Rand (7) umfasst und der Kapselgrundkörper (4) aus einem Weichmaterial ausgebildet ist, und
**dass** das Versteifungselement (8) an dem umlaufenden flanschartigen Rand (7) derart angeordnet ist, dass der Rand (7) eine dem Boden (5) zugewandte umlaufende Dichtfläche (11) ausbildet, wobei das Hartmaterial im Vergleich zum Weichmaterial härter ist.

2. Mehrfachverwendbare Kapsel nach Anspruch 1, **dadurch gekennzeichnet, dass** das Weichmaterial des Kapselgrundkörpers (4) gegen den Siebeinsatz (3) anliegt.

3. Mehrfach verwendbare Kapsel nach Anspruch 1 oder 2, **dadurch gekennzeichnet, dass** der Kapselgrundkörper (4) an einer Innenseite der Seitenwand (6) einen Absatz (13) aufweist, auf welchem der Siebeinsatz (3) aufliegt.

4. Mehrfach verwendbare Kapsel nach Anspruch 1 bis 3, **dadurch gekennzeichnet, dass** das Versteifungselement (8) und der Kapselgrundkörper (4) eine formschlüssige und/oder stoffschlüssige Verbindung ausbilden.

5. Mehrfach verwendbare Kapsel nach einem der Ansprüche 1 bis 4, **dadurch gekennzeichnet, dass** das Versteifungselement (8) Durchgangsausnehmungen (14) aufweist und vom Weichmaterial des Kapselgrundkörpers (4) umgeben ist.

6. Mehrfach verwendbare Kapsel nach einem der Ansprüche 1 bis 5, **dadurch gekennzeichnet, dass** das Versteifungselement (8) C-förmig ausgebildet ist.

7. Mehrfach verwendbare Kapsel nach einem der Ansprüche 1 bis 6, **dadurch gekennzeichnet, dass** die Angriffsfläche (12) umlaufend ausgebildet ist.

8. Mehrfach verwendbare Kapsel nach einem der Ansprüche 1 bis 7, **dadurch gekennzeichnet, dass** das Weichmaterial derart ausgebildet ist, dass der Kapselgrundkörper (4) durch die Öffnung (10) umstülpbar ist.

9. Mehrfach verwendbare Kapsel nach einem der Ansprüche 1 bis 8, **dadurch gekennzeichnet, dass** das Hartmaterial ein Metall, insbesondere Aluminium oder Edelstahl, oder ein Hartkunststoff, insbesondere ein harter Silikonkautschuk, ein Polyamid, Polypropylen, Polyethylen, Polycarbonat, Polyethylenterephthalat, Polytetrafluorethylen oder Polyethylennaphthalat, ist.

10. Mehrfach verwendbare Kapsel nach einem der Ansprüche 1 bis 9, **dadurch gekennzeichnet, dass** das Weichmaterial ein Elastomer ist.

11. Mehrfach verwendbare Kapsel nach einem der Ansprüche 1 bis 10, **dadurch gekennzeichnet, dass** der Siebeinsatz (3) aus Metall oder einem Hartkunststoff ist.

12. Mehrfach verwendbare Kapsel nach einem der Ansprüche 1 bis 11, **dadurch gekennzeichnet, dass** sich der Siebeinsatz (3) im Querschnitt verjüngt.

13. Verfahren zur Zubereitung von Getränken mit einer mehrfach verwendbaren Kapsel mittels einer Kapsel-Getränkemaschine, umfassend die Schritte:
- Bereitstellen einer mehrfach verwendbaren Kapsel (1) nach einem der Ansprüche 1 bis 12,
- Befüllen des Kapselbehälters (2) mit einem Getränkerohmaterial,
- Verschließen des Kapselbehälters (2) mit dem Siebeinsatz (3),
- Anordnen der befüllten Kapsel (1) in einer Kapsel-Getränkemaschine,
- Abdichten einer Brühkammer (16) der Kapsel-Getränkemaschine mittels der Dichtfläche (11),
- Zubereiten eines Getränks, indem ein Fluid durch die befüllte Kapsel (1) gedrückt wird,
- Auswerfen der Kapsel (1) aus der Brühkammer (16) durch Angreifen eines Auswurfelements der Kapsel-Getränkemaschine an der Angriffsfläche (12).

## Claims

1. Reusable capsule for preparing beverages using a capsule beverage machine, comprising
- a capsule container (2)
-- with a capsule main body (4) for receiving a beverage raw material, the capsule main body (4) comprising
--- a bottom (5) with at least one through-opening (9), and
--- a side wall (6), which forms an opening (10), and
-- with a reinforcing element (8) for forming an engagement surface (12), the reinforcing element (8) being made of a hard material,
- a screen insert (3) for closing the capsule container (2),
**characterised in**
**that** the capsule main body (4) comprises a circumferential flange-like edge (7), and the capsule main body (4) is made of a soft material, and **that** the reinforcing element (8) is arranged on the circumferential flange-like edge (7) in such a way that the edge (7) forms a circumferential sealing surface (11) facing the bottom (5), the hard material having a greater hardness than the soft material.

2. Reusable capsule as claimed in claim 1, **characterised in that** the soft material of the capsule main body (4) abuts against the screen insert (3).

3. Reusable capsule as claimed in claim 1 or 2, **characterised in that** the capsule main body (4) has, on an inner side of the side wall (6), a shoulder (13) on which the screen insert (3) rests.

4. Reusable capsule as claimed in claim 1 to 3, **characterised in that** the reinforcing element (8) and the capsule main body (4) form a positive connection and/or a material bond.

5. Reusable capsule as claimed in any one of claims 1 to 4, **characterised in that** the reinforcing element (8) has passage recesses (14) and is surrounded by the soft material of the capsule main body (4).

6. Reusable capsule as claimed in any one of claims 1 to 5, **characterised in that** the reinforcing element (8) is configured in the shape of a letter C.

7. Reusable capsule as claimed in any one of claims 1 to 6, **characterised in that** the engagement surface (12) is configured circumferentially.

8. Reusable capsule as claimed in any one of claims 1 to 7, **characterised in that** the soft material is configured such that the capsule main body (4) can be turned inside out through the opening (10).

9. Reusable capsule as claimed in any one of claims 1 to 8, **characterised in that** the hard material is a metal, in particular aluminium or stainless steel, or a hard plastic material, in particular a hard silicone rubber, a polyamide, polypropylene, polyethylene, polycarbonate, polyethylene terephthalate, polytetrafluoroethylene or polyethylene naphthalate.

10. Reusable capsule as claimed in any one of claims 1 to 9, **characterised in that** the soft material is an elastomer.

11. Reusable capsule as claimed in any one of claims 1 to 10, **characterised in that** the screen insert (3) is of metal or of a hard plastic material.

12. Reusable capsule as claimed in any one of claims 1 to 11, **characterised in that** the screen insert (3) has a tapering cross-section.

13. Method of preparing beverages with a reusable capsule using a capsule beverage machine, the method comprising the steps of:
- providing a reusable capsule (1) as claimed in any one of claims 1 to 12,
- filling the capsule container (2) with a beverage raw material,
- closing the capsule container (2) with the screen insert (3),
- arranging the filled capsule (1) in a capsule beverage machine,
- sealing a brewing chamber (16) of the capsule beverage machine using the sealing surface (11),
- preparing a beverage by pressing a fluid through the filled capsule (1),
- ejecting the capsule (1) from the brewing chamber (16) by engagement of an ejector element of the capsule beverage machine with the engagement surface (12).

## Revendications

1. Capsule réutilisable pour la préparation de boissons au moyen d'un distributeur de boissons à capsules, comprenant
- un récipient de capsule (2) pourvu
-- d'un corps de base de capsule (4) conçu pour recevoir une matière première de boisson, qui comprend
--- un fond (5) avec au moins une ouverture de passage (9) et
--- une paroi latérale (6) formant une ouverture (10), et
-- d'un élément de renfort (8) conçu pour former une surface d'appui (12), qui est formé d'un matériau dur,
- un élément filtrant (3) conçu pour fermer le récipient de capsule (2),
**caractérisée**
**en ce que** le corps de base de capsule (4) comprend un bord périphérique (7) en forme de bride et le corps de base de capsule (4) est formé d'un matériau souple, et
**en ce que** l'élément de renfort (8) est agencé sur le bord périphérique (7) en forme de bride de sorte que le bord (7) forme une surface d'étanchéité périphérique (11) orientée vers le fond (5), le matériau dur étant plus dur par comparaison avec le matériau souple.

2. Capsule réutilisable selon la revendication 1, **caractérisée en ce que** le matériau souple du corps de base de capsule (4) repose contre l'élément filtrant (3).

3. Capsule réutilisable selon la revendication 1 ou 2, **caractérisée en ce que** le corps de base de capsule (4) présente sur un côté intérieur de la paroi latérale (6) un épaulement (13) sur lequel s'appuie l'élément filtrant (3).

4. Capsule réutilisable selon les revendications 1 à 3, **caractérisée en ce que** l'élément de renfort (8) et le corps de base de capsule (4) forment une liaison par accouplement de matière et/ou par accouplement de forme.

5. Capsule réutilisable selon l'une des revendications 1 à 4, **caractérisée en ce que** l'élément de renfort (8) présente des cavités de passage (14) et est entouré par le matériau souple du corps de base de capsule (4).

6. Capsule réutilisable selon l'une des revendications 1 à 5, **caractérisée en ce que** l'élément de renfort (8) est en forme de C.

7. Capsule réutilisable selon l'une des revendications 1 à 6, **caractérisée en ce que** la surface d'appui (12) est formée de manière périphérique.

8. Capsule réutilisable selon l'une des revendications 1 à 7, **caractérisée en ce que** le matériau souple est formé de sorte que le corps de base de capsule (4) peut être retourné à travers l'ouverture (10).

9. Capsule réutilisable selon l'une des revendications 1 à 8, **caractérisée en ce que** le matériau dur est un métal, en particulier de l'aluminium ou de l'acier inoxydable, ou une matière plastique dure, en particulier un caoutchouc de silicone dur, un polyamide, du polypropylène, du polyéthylène, du polycarbonate, du téréphtalate de polyéthylène, du polytétrafluoroéthylène ou du naphtalate de polyéthylène.

10. Capsule réutilisable selon l'une des revendications 1 à 9, **caractérisée en ce que** le matériau souple est un élastomère.

11. Capsule réutilisable selon l'une des revendications 1 à 10, **caractérisée en ce que** l'élément filtrant (3) est constitué de métal ou d'une matière plastique dure.

12. Capsule réutilisable selon l'une des revendications 1 à 11, **caractérisée en ce que** l'élément filtrant (3) est effilé dans sa section transversale.

13. Procédé de préparation de boissons avec une capsule réutilisable au moyen d'un distributeur de boissons à capsules, comprenant les étapes de :
- fourniture d'une capsule réutilisable (1) selon l'une des revendications 1 à 12,
- remplissage du récipient de capsule (2) avec une matière première de boisson,
- fermeture du récipient de capsule (2) avec l'élément filtrant (3),
- placement de la capsule (1) remplie dans un distributeur de boissons à capsules,
- scellage d'un compartiment d'infusion (16) du distributeur de boissons à capsules au moyen de la surface d'étanchéité (11),
- préparation d'une boisson en pressant un fluide à travers la capsule (1) remplie,
- éjection de la capsule (1) hors du compartiment d'infusion (16) en engageant un élément d'éjection du distributeur de boissons à capsules sur la surface d'appui (12).
